Europäisches Patentamt

European Patent Office

Office européen des brevets

(19)

(11) EP 0 739 111 A2

(12) EUROPÄISCHE PATENTANMELDUNG

(43) Veröffentlichungstag:
23.10.1996 Patentblatt 1996/43

(51) Int Cl.⁶: **H04L 12/26**, H04L 12/24

(21) Anmeldenummer: 96200941.1

(22) Anmeldetag: 11.04.1996

(84) Benannte Vertragsstaaten:
**DE FR GB**

(30) Priorität: **19.04.1995 DE 19513892**

(71) Anmelder:
• **Philips Patentverwaltung GmbH**
**22335 Hamburg (DE)**
Benannte Vertragsstaaten:
**DE**
• **Philips Electronics N.V.**
**5621 BA Eindhoven (NL)**
Benannte Vertragsstaaten:
**FR GB**

(72) Erfinder:
• **Möller, Marita, Dr., c/o Philips Patentver. GmbH**
**22335 Hamburg (DE)**
• **Tretter, Stefan, Dipl.-Inform.**
**22335 Hamburg (DE)**

(74) Vertreter: **Volmer, Georg, Dipl.-Ing. et al**
**Philips Patentverwaltung GmbH,**
**Röntgenstrasse 24**
**22335 Hamburg (DE)**

(54) **Übertragungssystem mit einem Netzwerküberwachungssystem**

(57)     Die Erfindung bezieht sich auf ein Übertragungssystem mit einem aus mehreren Netzelementen (2) bestehenden Netzwerk und ein zur Verwaltung des Netzwerkes und zur Verarbeitung von Fehlermeldungen des Netzwerkes dienendes Netzwerküberwachungssystem (1). Das Netzwerküberwachungssystem (1) enthält ein Filter (5), daß zur Korrelierung verschiedener Meldungen über Fehlerzustände (Notifikationen) des Netzwerkes und nach wenigstens einer Abfrage über wenigstens eine Konfiguration des Netzwerkes zur Bildung einer gefilterten Meldung über den Zustand (Notifikation) des Netzwerkes an wenigstens ein Modul des Netzwerküberwachungssystems (1) vorgesehen ist.

FIG.3

**Beschreibung**

Die Erfindung bezieht sich auf ein Übertragungssystem mit einem aus mehreren Netzelementen bestehenden Netzwerk und ein zur Verwaltung des Netzwerkes und zur Verarbeitung von Fehlermeldungen des Netzwerkes dienendes Netzwerküberwachungssystem.

Ein solches Übertragungssystem ist aus dem Dokument "Philips Telecommunication Review, Vol. 51, No. 2, English Edition, Seiten 4 bis 17" bekannt. Bei diesem Übertragungssystem handelt es sich um ein aus mehreren Multiplexern, Cross-Connects und digitalen Vermittlungsstellen (insgesamt als Netzelemente bezeichnet) aufgebautes Netzwerk und einem Netzwerküberwachungssystem (Netzmanagement). Das Netzwerküberwachungssystem dient zur Konfigurierung, Überwachung und Ersatzschaltung von Übertragungswegen des Netzwerkes. Das Netzwerküberwachungssystem erhält Meldungen bei Fehlerzuständen im Netzwerk. Diese Meldungen über Zustände im Netzwerk werden als Notifikationen bezeichnet. Aufgrund von Fehlermeldungen werden vom Netzwerküberwachungssystem verschiedene Aktionen ausgelöst. Beispielsweise wird bei Ausfall eines Netzelementes ein Ersatzschaltweg vom Netzwerküberwachungssystem geschaltet. Bei einem solchen Ausfall ergibt sich eine Flut von redundanten Fehlermeldungen, die das Netzwerküberwachungssystem bearbeiten und für die in einem solchen Fall Rechenkapazität zur Verfügung gestellt werden muß. Beispielsweise werden Fehlermeldungen von den verschiedenen Übertragungsebenen an das Netzwerküberwachungssystem gesendet.

Der Erfindung liegt die Aufgabe zugrunde, ein Übertragungssystem zu schaffen, bei dem die eintreffenden Fehlermeldungen das Netzwerkübertragungssystems nicht zu stark belasten.

Die Aufgabe wird durch ein Übertragungssystem der eingangs genannten Art dadurch gelöst, das Netzwerküberwachungssystem ein Filter enthält, daß zur Korrelierung verschiedener Meldungen über Fehlerzustände (Notifikationen) des Netzwerkes und nach wenigstens einer Abfrage über wenigstens eine Konfiguration des Netzwerkes zur Bildung einer gefilterten Meldung über den Zustand (Notifikation) des Netzwerkes an wenigstens ein Modul des Netzwerküberwachungssystems vorgesehen ist.

Das Netzwerküberwachungssystem enthält erfindungsgemäß ein Filter, welches die eintreffenden Notifikationen (Zustandsmeldungen) des Netzwerkes so filtert, daß nur relevante Informationen an ein Modul, das beispielsweise auf eine solche gefilterte Notifikation eine Aktion durchführt (z.B. Ersatzwegeschaltung), des Netzwerküberwachungssystems gesendet werden. Treffen bestimmte Nototifikationen im Filter ein, so kann das Filter daraus schließen, daß ein bestimmter Fehler (z.B. Kabelbruch) vorliegt. Durch eine anschließende Abfrage über eine bestimmte Konfiguration des Netzwerkes (Konfigurationsinformation) wird überprüft, ob der Fehler, auf den durch die bestimmten Notifikationen geschlossen worden ist, vorliegt. Durch die jeweils vorgenommene Einholung einer Konfigurationsinformation wird immer der aktuelle Netzwerkaufbau überprüft. Das Filter kann Bestandteil (Modul) eines Softwarepaketes des Netzwerküberwachungssystems sein, das auf einem oder mehreren Computersystemen läuft, oder ein eigenes Softwarepaket auf einen separaten Computersystem sein.

Das Filter führt entweder eine Selektionsfilterung durch, indem eine Notifikation von mehreren empfangenen Notifikationen an wenigstens ein Modul des Netzwerküberwachungssystems weitergeleitet wird, oder eine Verdichtungsfilterung, indem eine aus mehreren Notifikationen gebildete neue Notifikation an wenigstens ein Modul des Netzwerküberwachungssystems weitergeleitet wird.

Das Filter enthält wenigstens einen Eingangsverteiler, wenigstens ein Korrelationsmodul und wenigstens einen Ausgangsverteiler. Ein Eingangsverteiler ist zum Empfang von Notifikationen und zur Verteilung der empfangenen Notifikationen an wenigstens ein Korrelationsmodul vorgesehen. Ein Korrelationsmodul dient zur Korrelierung von Notifikationen, zur Abfrage über wenigstens eine Konfiguration des Netzwerkes und zur Bildung einer gefilterten Notifikation. Ein Ausgangsverteiler ist zum Empfang einer Notifikation von wenigstens einem Korrelationsmodul und zur Lieferung einer empfangenen Notifikation an ein Managementsystem des Netzwerküberwachungssystems vorgesehen. Es können im Filter jeweils mehrere Eingangsverteiler, mehrere Konfigurationsmodule und mehrere Ausgangsverteiler in Abhängigkeit von der Art des Netzwerkes und der Lastverteilung vorhanden sein. Aufgrund des modularen Aufbaus können einzelne Komponenten des Filters auch an lokal verschiedenen Orten bzw. unterschiedlichen Computersystemen geladen sein.

Ein Eingangsverteiler und ein Ausgangsverteiler sind jeweils zur Entnahme des Bestimmungsortes einer zu verteilenden Notifikation aus wenigstens einer Tabelle vorgesehen sind. Durch diese Ablage des Bestimmungsortes in einer Tabelle ist die Veränderung von Bestimmungsorten auf einfache Weise durch Austauschen von Tabelleninformationen möglich.

Da Notifikationen in der Regel nicht gleichzeitig bei einem Korrelationsmodul eintreffen ist für die Korrelierung der Notifikationen eine Pufferung oder Speicherung der Notifikationen erforderlich. Ein Korrelationsmodul ist daher zum Ausstausch von Daten mit einem Puffer vorgesehen. Mit der eigentlichen Notifikation werden weitere der Notifikation zugeordnete Daten im Puffer gespeichert, nämlich die Verweilzeit der Notifikation im Puffer und eine Markierung über die Weiterleitung der Notifikation. Eine Notifikation wird von einem Korrelationsmodul nach Überschreiten einer maximalen Verweilzeit im Puffer gelöscht. Es wird dann davon ausgegangen, daß diese Notifikation nicht mehr für eine Korrelation interessant ist. Ein Korrelationsmodul kann bestimmte Notifikationen markieren. Diese Markierung gibt an, ob die Notifikation zu einem Ausgangsverteiler weitergeleitet wird.

Eine Wartungsvorrichtung ist zur Lieferung von neuen oder geänderten Korrelationsmodulen an das Filter und zur Änderung der in wenigstens einer Tabelle gespeicherten Bestimmungsorte für Notifikationen vorgesehen. Außerdem kann die Wartungsvorrichtung auch die maximale Verweilzeit im Puffer für jede Gruppe von auch in einer Tabelle abgelegt werden. Aufgrund dieser Anpassungen von der Wartungsvorrichtung ist das Filter sehr leicht veränderbar.

Die Erfindung bezieht sich auch auf ein Filter für ein Netzwerküberwachungssystem, welches zur Verwaltung eines aus mehreren Netzelementen bestehenden Netzwerkes und zur Verarbeitung von Fehlermeldungen des Netzwerkes dient. Das Filter ist zur Korrelierung verschiedener Meldungen über Fehlerzustände (Notifikationen) des Netzwerkes und nach wenigstens einer Abfrage über wenigstens eine Konfiguration des Netzwerkes zur Bildung einer gefilterten Meldung über den Zustand (Notifikation) des Netzwerkes an wenigstens ein Modul des Netzwerküberwachungssystems vorgesehen.

Ausführungsbeispiele der Erfindung werden nachstehend anhand der Fig. näher erläutert. Es zeigen:

Fig. 1          ein Übertragungssystem mit einem Netzwerküberwachungssystem und mehreren Netzelementen,

Fig. 2          einen Ausschnitt des in Fig. 1 dargestellten Übertragungssystems,

Fig. 3          ein im Netzwerküberwachungssystem enthaltenes Filter,

Fig. 4, 5 und 6     jeweils einen Zustandsgraphen für eine Korrelationsbeschreibung eines in dem Filter verwendeten Korrelationsmoduls.

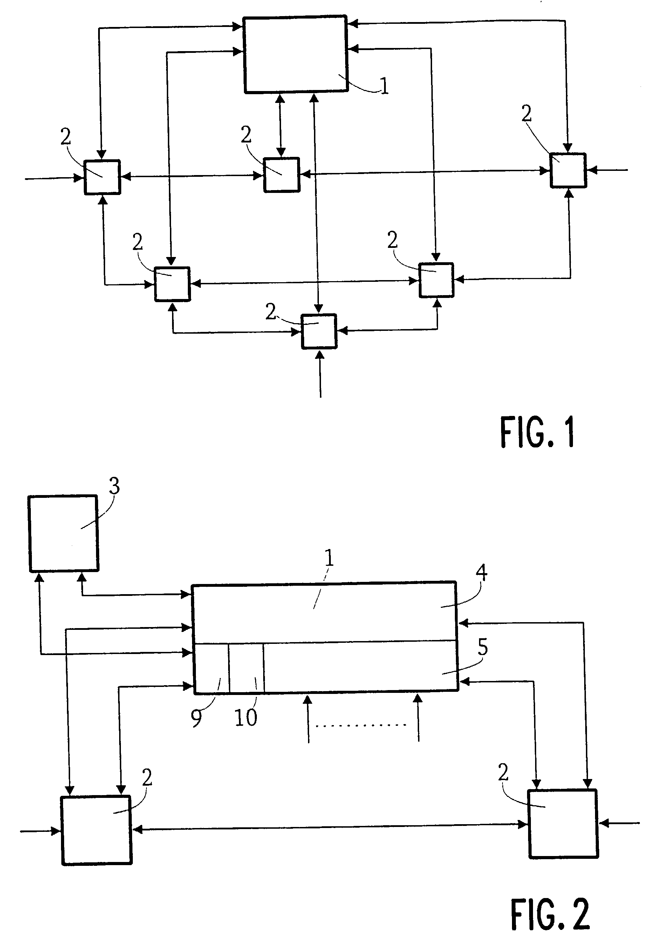

Das in Fig. 1 dargestellte Übertragungssystem enthält ein Netzwerküberwachungssystem 1 und mehrere Netzelemente 2, die ein Netzwerk bilden. Das Übertragungssystem kann beispielsweise zur Übertragung von Signalen nach der Synchronen Digitalen Hierachie (SDH) dienen und die einzelnen Netzelemente 2 können SDH-Multiplexer (z.B. Add-Drop-Multiplexer) sein. Die Netzelemente 2 (SDH-Multiplexer) verarbeiten beispielsweise STM-1-Signale. Ein STM-1-Signal ist ein rahmenstrukturiertes Signal und in der CCITT-Empfehlung G.709 näher erläutert. Ein STM-1-Rahmen besteht aus 270 Spalten und 9 Zeilen (pro Zeile 270 Bytes). In den Spalten 1 bis 9 sind Steuerinformationen und in den restlichen Spalten die eigentliche Nutzinformation (AU-Payload) enthalten. Die Nutzinformation kann sich aus Informationen verschiedener Signale zusammensetzen. Beispielsweise sind 63 VC-12-Container, die jeweils Daten von plesiochronen 2-Mbit/s-Signalen enthalten, in einem VC-4-Container und der wiederum in einer AU-Payload eingefügt. Ein Netzelement 2 kann auch in ein STM-1-Signal Daten von empfangenen plesiochronen Signalen einfügen oder auch Daten herausnehmen und weiterleiten.

Zur Überwachung und zum Management des Übertragungssystems ist das Netzwerküberwachungssystem 1 vorgesehen. Dieses kann beispielsweise aus einem Computersystem bestehen, auf welchem eine Management- und Überwachungssoftware läuft. Das Netzwerküberwachungssystem 1 kann beispielsweise Einstellinformationen an die einzelnen Netzelemente 2 liefern oder Informationen darüber, wie ein STM-1-Signal zusammengesetzt werden soll. Weiter erhält das Netzwerküberwachungssystem 1 Fehlerinformationen von den einzelnen Netzelementen 2. Ein Kabelbruch verursacht beispielsweise Fehlermeldungen von jedem an dem gebrochenen Kabel angeschlossenen Netzelement 2 an das Netzwerküberwachungssystem 1. Diese Meldungen können gehäuft auftreten, wenn beispielsweise eine Fehlermeldung bezüglich jedes VC-12-Containers geliefert wird. Diese Fehlermeldungen werden in dem Netzwerküberwachungssystem 1 verarbeitet und lösen bestimmte Aktionen des Netzwerküberwachungssystems 1 aus.

In der Fig. 2 ist ein Ausschnitt des Übertragungssystems nach der Fig. 1 gezeigt. Es sind zwei Netzelemente 2, das Netzwerküberwachungssystem 1 und eine Wartungsvorrichtung 3 in der Fig. 2 enthalten. Das Netzwerküberwachungssystem 1 besteht aus einem Managementsystem 4, einem Filter 5, welches Meldungen von den Netzelementen 2 für das Managementsystem 4 nach bestimmten Vorschriften verarbeitet, einem Puffer 9 und einer Tabelle 10. Außer den Meldungen für das Filter 5 tauschen die Netzelemente 2 auch weitere Informationen direkt mit dem Managementsystem aus. Zwischen der Wartungsvorrichtung 3 und dem Managementsystem 4 bzw. dem Filter 5 werden auch Nachrichten und Steueranweisungen übertragen. Das Filter tauscht Informationen mit dem Puffer 9 und der Tabelle 10 aus.

Das Filter 5 empfängt von den Netzelementen 2 Meldungen über jeweilige Zustandsänderungen. Diese Meldungen über Zustandsänderungen werden als Notifikationen bezeichnet. Das Filter 5 entnimmt eine bestimmte Notifikation einer Anzahl von Notifikationen (Selektionsfilterung) und/oder bildet aus einer Anzahl von Notifikationen eine einzige Notifikation (Verdichtungsfilterung). Die selektierten und/oder verdichteten Notifikationen werden vom Filter 5 an das Managementsystem 4 geliefert. Das Filter 5 reduziert also den Informationsfluß, so daß von Managementsystem 4 nur die relevanten Notifikationen verarbeitet werden müssen.

Eine Selektionsfilterung wird durchgeführt, wenn eine Zustandsänderung im Netzwerk (z.B. eine Karte oder Platine eines Netzelementes 2 ist defekt) eine Flut von Notifikationen auslöst. Es wird nur eine Primärnotifikation und nicht die Sekundärnotifikationen an das Managementsystem 4 weitergeleitet. Die Primärnotifikation wäre bei einer defekten Karte eines Netzelementes die Meldung über die defekte Karte. Sekundärnotifikationen wären Meldungen über das defekte Netzelement 2 und Meldungen über eine unterbrochene Transportverbindung.

Eine Verdichtungsfilterung ist das Zusammenfassen mehrerer Notifikationen zu einer einzigen mit verändertem Informationsgehalt. Eine solche Verdichtungsfilterung wird durchgeführt, wenn z.B. ein Kabelbruch auftritt und beide an dem Kabel angeschlossene Netzelemente die Notifikation "Signalverlust" melden. Diese beiden Notifikationen können zu einer Notifikation "Kabelbruch" zusammengefaßt werden, die an das Managementsystem 4 geliefert wird.

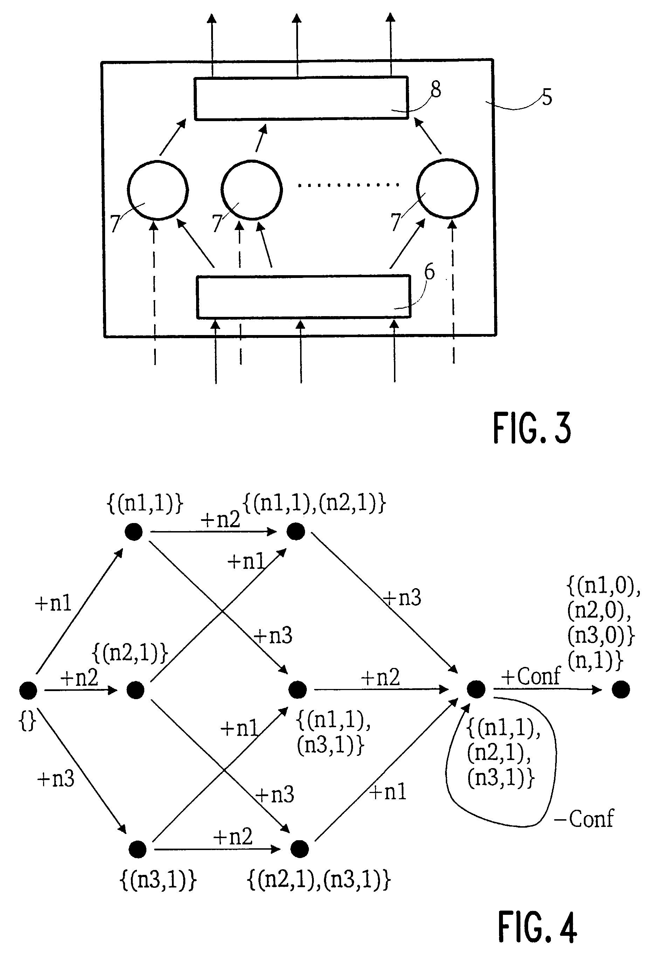

Das Filter 5 enthält verschiedene Softwaremodule, die von der Wartungsvorrichtung 3 auch jeweils nach Bedarf verändert werden können. Die eingehenden Notifikationen werden von einem oder mehreren Eingangsverteilern 6 (Fig. 3) empfangen und an ein oder mehrere Korrelationsmodule 7 weitergeleitet. Ein Korrelationsmodul 7 puffert die Notifikationen für eine bestimmte Zeit und überprüft Zusammenhänge zwischen den gepufferten Notifikationen. Ein Korrelationsmodul 7 führt also die Selektions- oder Verdichtungsfilterung durch. Eine gefilterte Notifikation wird von einem Korrelationsmodul 7 zu einem oder mehreren Ausgangsverteilern 8 gegeben, die empfangene Notifikationen an das Managementsystem 4 weiterleiten. In jedem Filter 5 ist also mindestens ein Eingangs- und Ausgangsverteiler 6 und 8 und ein Korrelationsmodul 7 enthalten.

Ein Eingangs- oder Ausgangsverteiler 6 und 8 empfängt jeweils Notifikationen entweder von Netzelementen 2 oder Korrelationsmodulen 7. Die empfangenen Notifikationen werden entweder an bestimmte Korrelationsmodule 7 oder bestimmte Module des Managementsystems 4 weitergeleitet. Die Adresse für eine Komponente (Adresse eines Korrelationsmoduls 7 oder Adresse eines Moduls des Managementsystems 4) entnimmt ein Eingangs- oder Ausgangsverteiler 6 oder 8 jeweils einer Tabelle 10. Diese Tabelle 10 wird von der Wartungsvorrichtung 3 verwaltet.

Hierdurch ist eine leichte Anpaßbarkeit der Eingangs- und Ausgangsverteiler 6 und 8 an veränderte Netzwerkgegebenheiten möglich. Mit dem Start des Managementsystems 4 werden die Einträge in die jeweilige Tabelle 10 geschrieben. Die Eintragungen in der Tabelle 10 können während der Laufzeit bzw. des Betriebes geändert werden.

Die Korrelationsmodule 7 werden beim Start des Managementsystems 4 ebenfalls geladen. Die entsprechenden Korrelationsbeschreibungen für die Korrelationsmodule 7 liefert auch die Wartungsvorrichtung 3. Korrelationsmodule können während des Betriebes auch von der Wartungsvorrichtung verändert oder neu installiert werden. Das wird dadurch ermöglicht, da die Korrelationsmodule nur bei bestimmten Fehlermeldungen aktiv sind. Während der Laufzeit oder des Betriebes erhält ein Korrelationsmodul 7 Notifikationen, die jeweils gepuffert und auf Korrelation mit einer oder mehreren anderen Notifikationen geprüft werden. Bei dieser Überprüfung sind möglicherweise auch Informationen über Konfigurationen des Netzwerkes erforderlich. Ein Korrelationsmodul 7 erhält auf Anfrage bestimmte Konfigurationsinformationen direkt von den Netzelementen 2. Diese Konfigurationsinformationen sollen bestätigen, was für korrelierte Notifikationen vorausgesetzt wird. Beispielsweise kann ein Korrelationsmodul 7 aufgrund verschiedener Notifikationen einen Kabelbruch feststellen, falls diese Notifikationen von verbundenen Netzelementen 2 kommen. Durch die Konfigurationsinformation wird überprüft, ob dies der Fall ist.

Korrelieren eine Anzahl von Notifikationen, so ist durch die Korrelationsbeschreibung eines Korrelationsmoduls 7 festgelegt, welche Notifikationen weitergeleitet oder vernichtet oder generiert werden. Ein Korrelationsmodul 7 markiert also die gepufferten Notifikationen so, daß sie entweder zu unterdrücken oder weiterzuleiten sind. Hat eine Notifikation im Puffer 9 ihre maximale Verweilzeit (t0) erreicht, so wird sie abhängig von ihrer Markierung weitergeleitet oder vernichtet.

Eine Korrelationsbeschreibung kann durch den Ausdruck

$$\{n1, n2, ..., nk, \text{Conf} \mid n\}$$

dargestellt werden. Dieser Ausdruck gibt folgendes an: Sind zu einem Zeitpunkt die Notifikationen n1 bis nk im Puffer 9 und gilt die Konfigurationsinformation (Conf = wahr), so werden die Notifikationen n1 bis nk im Puffer 9 mit einer "0" markiert und die gefilterte Notifikation n gepuffert. Die Notifikation n kann eine Notifikation aus einer der Notifikationen n1 bis nk (Selektionsfilterung) oder eine neue Notifikation (Verdichtungsfilterung) sein. Im ersten Fall wird unverändert die Markierung der selektierten Notifikation für n übernommen und die restliche Verweilzeit wird nicht verändert. Im anderen Fall wird die Notifikation n gleich "1" und die Verweilzeit gleich der maximalen Verweilzeit t0 gesetzt. Ein Puffer 9 enthält also jeweils zu einer Notifikation eine Markierung, eine Angabe über die Verweilzeit der Notifikation im Puffer 9 und die eigentliche Notifikation. Die restliche Verweilzeit im Puffer 9 kann z.B. mit einem Zähler bestimmt werden. Die Verweilzeit kann für jeweils für verschiedene Gruppen von Notifikationen unterschiedlich sein.

Jede Notifikation wird aus dem Puffer 9 spätestens nach einer maximalen Verweilzeit von t0 entnommen. Hierunter fallen auch die jeweils generierten Notifikationen. Notifikationen mit der Markierung "0" werden gelöscht und Notifikationen mit der Markierung "1" werden zum nachgeschalteten Ausgangsverteiler 8 weitergeleitet.

Die oben geschilderten Zusammenhänge können anhand eines in der Fig. 4 angedeuteten Zustandgraphen für die Korrelationsbeschreibung

{n1, n2, n3, Conf(n1, n2, n3) I n}

näher erläutert werden. Jeder Zustand des zur Korrelationsbeschreibung zugehörigen Korrelationsmoduls 7 ist durch einen ausgefüllten Kreis mit zugehörigem Pufferinhalt angegeben. Beispielsweise bedeutet {(n1, 1), (n2, 1)}, daß die Notifikationen n1 und n2 im Puffer 9 sind und mit "1" markiert sind. {} bedeutet, daß der Puffer 9 für diese Korrelationsbeschreibung leer ist. Ein Pfeil mit einem Zusatz (z.B. +n3) bedeutet, daß eine weitere Notifikation dazugekommen ist. Hierbei kann beispielsweise ein Zustandswechsel von {(n1, 1)} zu {(n1, 1), (n3, 1)} stattfinden. Ist in dem Puffer 9 diese Notifikation schon vorhanden, beginnt nur die Verweildauer wieder am Anfangswert. Dies ist in der Fig. 4 graphisch nicht angegeben. Auch ein Löschen einer Notifikation (z.B. -n3) ist nicht dargestellt. In diesem Fall gäbe es einen Zustandswechsel beispielsweise von {(n2, 1), (n3, 1)} zu {(n2, 1)}. Durch Abfragen einer Konfigurationsinformation wird überprüft, ob diese durch die Notifikationen angegebene Konfiguration (z.B. Existenz einer Verbindung) erfüllt ist. Ist dies nicht der Fall (-Conf (Conf = falsch)) bleibt der Zustand {(n1, 1), (n2, 1), (n3, 1)} erhalten. In dem anderen Fall (+Conf (Conf = wahr)) wird in den Zustand {(n1, 0), (n2, 0), (n3, 0), (n, 1)} übergegangen.

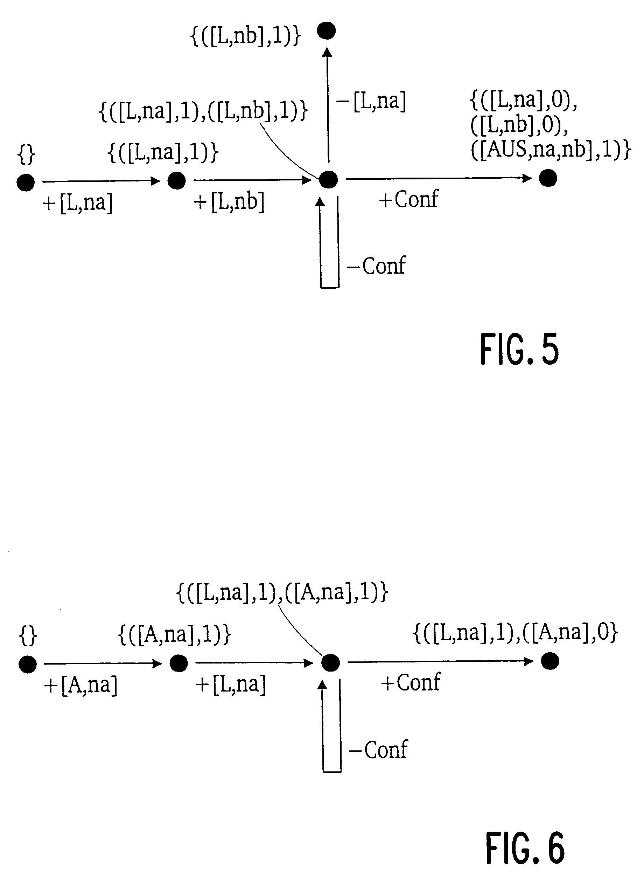

Anhand von zwei in den Fig. 5 und 6 aufgeführten Beispielen wird im folgenden ein Korrelationsmodul näher erläutert. Hierbei soll vorausgesetzt werden, daß zwischen den beiden Netzelementen 2 nach der Fig. 2 STM-1-Signale mit einem VC-4-Container und darin enthaltenen 63 VC-12-Containern übertragen werden. Jedes Netzelement 2 liefert für bestimmte Signalebenen Fehlermeldungen. Auf der STM-1-Ebene wird ein LOS-Meldung (Loss Of Signal = Trägersignalverlust) und auf der Container-Ebene jeweils ein AIS-Meldung (Alarm Indication Signal = Folgefehler einer Übertragungsstörung) gemeldet.

Eine Korrelationsbeschreibung, die einen Trägersignalverlust feststellt, läßt sich folgendermaßen ausdrücken:

{[L, NA], [L, NB], Conf(Verbindung(NA, NB)) I [AUS, NA, NB]},

wobei [L, NA] bzw. [L, NB] die Meldung eines Signalverlustes (L = LOS-Meldung) von einem Netzelement 2 angeben, das mit einer Variablen NA bzw. NB bezeichnet ist. Conf(Verbindung(NA, NB)) bedeutet, daß die beiden mit NA und NB bezeichneten und die Notifikationen [L, NA] bzw. [L, NB] liefernden Netzelemente 2 über eine Übertragungsstrecke miteinander verbunden sind. Conf(Verbindung(NA, NB)) wird überprüft, wenn beide Notifikationen gepuffert sind. Hierbei werden vom Korrelationsmodul, welches die oben angegebene Korrelationsbeschreibung enthält, Konfigurationsinformationen von den Netzelementen 2 benötigt.

In der Fig. 5 ist der Zustandsgraph für die letztgenannte Korrelationsbeschreibung dargestellt. Der linke äußere gefüllte Kreis gibt den Zustand bei leerem Puffer 9 wieder und wird durch die Beschreibung {} gekennzeichnet. Nach Pufferung der Notifikation [L, na] liegt der Zustand {([L, na], 1)} vor. Wird zusätzlich der Zustand [L, nb] im Puffer 9 gespeichert, ist der Zustand {([L, na], 1), ([L, nb], 1)} gegeben. na und nb sind jeweils Konstanten und geben bestimmte Netzelemente 2 an. Wird durch Abfrage der Konfigurationsinformation ein Signalverlust bestätigt, was durch "+Conf" gekennzeichnet wird, wird in den Zustand {([L, na], 0), ([L, nb], 0), ([AUS, na, nb], 1)} gewechselt. Dieser enthält eine durch eine Verdichtungsfilterung gebildete Notifikation ([AUS, na, nb], 1), welche einen Leitungsausfall kennzeichnet und über einen Ausgangsverteiler 8 an das Managementsystem 4 geliefert wird. Bestätigt die Abfrage der Konfigurationsinformation keinen Kabelbruch, liegt weiterhin der Zustand {([L, na], 1), ([L, nb], 1)} vor. Ist die Verweilzeit der ersten Notifikation [L, na] größer als die maximale Verweilzeit t0 wird in den Zustand {([L, nb], 1)} zurückgegangen. Weitere vorkommende Zustände und Zustandsänderungen sind ebenso wie in der folgenden Fig. 6 aus Gründen der Übersichtlichkeit nicht dargestellt (vgl. hierzu Beschreibung zu Fig. 4).

Um eine Überbelastung des Managementsystems 4 zu vermeiden, werden überflüssige Notifikationen von einem eine Selektionsfilterung durchführenden Korrelationsmodul über die Korrelationsbeschreibung

{[L, NA], [A, NB], Conf(Identität(NA, NB)) I [L, NA, NB]}

unterdrückt (Fig. 6). Die Notifikation [L, NA] bedeutet, das eine LOS-Meldung vom Netzelement 2, das mit NA bezeichnet ist, vorliegt. Eine AIS-Meldung vom mit NA bezeichneten Netzelement 2 wird über die Notifikation [A, NB] geliefert. Conf(Identität(NA, NB)) gibt an, daß NA und NB identisch sein müssen (die Variablen NA und NB müssen die gleichen Netzelemente 2 sein). Conf(Identität(NA, NB)) wird überprüft, wenn die Notifikationen [L, NA] und [A, NB] gepuffert sind. Hierbei werden vom Korrelationsmodul, welches die oben angegebene Korrelationsbeschreibung enthält, Konfigurationsinformationen von den Netzelementen 2 benötigt.

In der Fig. 6 ist für die Korrelationsbeschreibung der entsprechende Zustandsgraph aufgeführt. Der linke äußere gefüllte Kreis gibt den Zustand bei leerem Puffer 9 wieder und wird durch die Beschreibung "{}" gekennzeichnet. Nach Pufferung der Notifikation [A, na] liegt der Zustand {([A, na], 1)} vor. Wenn die Notifikation [L, na] auftritt, wird diese im Puffer 9 gespeichert und mit "1" markiert. Dieser Zustand wird in der Fig. 6 durch {([L, na], 1), ([A, na], 1)} beschrieben. Wird durch Abfrage der Konfigurationsinformation die Identität von na und na bestätigt, was durch "+Conf" gekennzeichnet wird, wird der Zustand in {([L, na], 1), ([A, na], 0)} geändert. Es wird also durch die Korrelationsbeschreibung jeder Folgefehler, d.h. die AIS-Meldung unterdrückt.

**Patentansprüche**

1. Übertragungssystem mit einem aus mehreren Netzelementen (2) bestehenden Netzwerk und ein zur Verwaltung des Netzwerkes und zur Verarbeitung von Fehlermeldungen des Netzwerkes dienendes Netzwerküberwachungssystem (1),
dadurch gekennzeichnet,
daß das Netzwerküberwachungssystem (1) ein Filter (5) enthält, daß zur Korrelierung verschiedener Meldungen über Fehlerzustände (Notifikationen) des Netzwerkes und nach wenigstens einer Abfrage über wenigstens eine Konfiguration des Netzwerkes zur Bildung einer gefilterten Meldung über den Zustand (Notifikation) des Netzwerkes an wenigstens ein Modul des Netzwerküberwachungssystems (1) vorgesehen ist.

2. Übertragungssystem nach Anspruch 1,
dadurch gekennzeichnet,
daß das Filter (5) zur Weiterleitung einer Notifikation von mehreren empfangenen Notifikationen oder einer aus mehreren Notifikationen gebildeten neuen Notifikation an wenigstens ein Modul des Netzwerküberwachungssystems (1) vorgesehen ist.

3. Übertragungssystem nach Anspruch 2,
dadurch gekennzeichnet,

   daß das Filter (5) wenigstens einen Eingangsverteiler (6), wenigstens ein Korrelationsmodul (7) und wenigstens einen Ausgangsverteiler (8) enthält,
   daß ein Eingangsverteiler (6) zum Empfang von Notifikationen und zur Verteilung der empfangenen Notifikationen an wenigstens ein Korrelationsmodul (7) vorgesehen ist,
   daß ein Korrelationsmodul (7) zur Korrelierung von Notifikationen, zur Abfrage über wenigstens eine Konfiguration des Netzwerkes und zur Bildung einer gefilterten Notifikation vorgesehen ist und
   daß ein Ausgangsverteiler (8) zum Empfang einer Notifikation von wenigstens einem Korrelationsmodul und zur Lieferung einer empfangenen Notifikation an ein Managementsystem (4) des Netzwerküberwachungssystems vorgesehen ist.

4. Übertragungssystem nach Anspruch 3,
dadurch gekennzeichnet,
daß ein Eingangsverteiler (6) und ein Ausgangsverteiler (8) jeweils zur Entnahme des Bestimmungsortes einer zu verteilenden Notifikation aus wenigstens einer Tabelle (10) vorgesehen sind.

5. Übertragungssystem nach Anspruch 4,
dadurch gekennzeichnet,

   daß ein Korrelationsmodul (7) zum Ausstausch von Daten mit einem Puffer (9) vorgesehen ist und
   daß der Puffer (9) jeweils zur Speicherung einer Notifikation, einer Verweilzeit der Notifikation im Puffer (9) und einer Markierung über die Weiterleitung der Notifikation vorgesehen ist.

6. Übertragungssystem nach Anspruch 5,
dadurch gekennzeichnet,
daß ein Korrelationsmodul (7) zur Löschung einer im Puffer (9) gespeicherten Notifikation nach Überschreiten einer maximalen Verweilzeit (t0) vorgesehen ist.

7. Übertragungssystem nach Anspruch 4, 5 oder 6,
dadurch gekennzeichnet,
daß eine Wartungsvorrichtung (3) zur Lieferung von neuen oder geänderten Korrelationsmodulen (7) an das Filter (5) und zur Änderung der in wenigstens einer Tabelle (10) gespeicherten Bestimmungsorte für Notifikationen vorgesehen ist.

8. Filter (5) für ein Netzwerküberwachungssystem (1), welches zur Verwaltung eines aus mehreren Netzelementen (2) bestehenden Netzwerkes und zur Verarbeitung von Fehlermeldungen des Netzwerkes dient,
<u>dadurch gekennzeichnet,</u>
daß das Filter (5) zur Korrelierung verschiedener Meldungen über Fehlerzustände (Notifikationen) des Netzwerkes und nach wenigstens einer Abfrage über wenigstens eine Konfiguration des Netzwerkes zur Bildung einer gefilterten Meldung über den Zustand (Notifikation) des Netzwerkes an wenigstens ein Modul des Netzwerküberwachungssystems (1) vorgesehen ist.

FIG. 1

FIG. 2

FIG. 3

FIG. 4

$\{([L,nb],1)\}$

$\{([L,na],1),([L,nb],1)\}$

$\{([L,na],1)\}$

$-[L,na]$

$\{([L,na],0),$
$([L,nb],0),$
$([AUS,na,nb],1)\}$

$\{\}$

$+[L,na]$

$+[L,nb]$

$+Conf$

$-Conf$

## FIG. 5

$\{([L,na],1),([A,na],1)\}$

$\{\}$

$\{([A,na],1)\}$

$\{([L,na],1),([A,na],0)\}$

$+[A,na]$

$+[L,na]$

$+Conf$

$-Conf$

## FIG. 6